# EUROPEAN PATENT APPLICATION

(11) **EP 4 597 249 A1**
(43) Date of publication of application: **06.08.2025**
(21) Application number: 24223670.1
(22) Date of filing: 30.12.2024
(51) Int. Cl.: G05D 1/224, G05D 1/667, G05D 105/28, G05D 107/70, G05D 109/10

(54) **LOAD HANDLING SYSTEM, METHOD AND COMPUTER PROGRAM PRODUCT**

(71) Applicant: Hiab AB, 215 32 Malmö (SE)
(72) Inventor: Raza, Minahil, 00940 Helsinki (FI); Piililä, Reima, 33720 Tampere (FI); Mäenpää, Pekka, 33720 Tampere (FI); Aref, Mohammad, 33610 Tampere (FI); Vihonen, Juho, 33100 Tampere (FI); Garagipati, Bharath, 33720 Tampere (FI)
(74) Representative: Papula Oy

(57) **Abstract**

Disclosed is a load handling system, a method and a computer program product. In a target selection operation state, a target position is identified in the representation of the surrounding of a load handling vehicle as an initially-selected target position and verified as a verified target position by obtaining a verification for the initially-selected target position. In a vehicle driving operation state, a driving instruction, provided based on the verified target position, is transmitted to a vehicle control unit.

## Description

### FIELD

The present invention relates to controlling a vehicle with load handling equipment, such as a vehicle with a hook lift, a skiploader or the like.

### BACKGROUND

As industries increasingly rely on automation and advanced machinery, having improved means for controlling load-handling vehicles has become essential. This is especially true in scenarios involving autonomous operation, where precision, safety, and efficiency are paramount.

### SUMMARY

An objective is to provide improved means for controlling a vehicle with load handling equipment, in particular for improving human-machine interaction. This may be used for different degrees of autonomous operation of the vehicle.

According to a first aspect, a load handling system for a vehicle with load handling equipment, is disclosed. The load handling system comprises a controller arranged to receive sensor input from a system of sensors at the vehicle for monitoring and mapping the surrounding of the vehicle. The system of sensors may comprise at least an image sensor unit and/or a distance mapping sensor unit. The controller is also arranged to identify a target position for the vehicle for load handling and determine, based on the sensor input and the target position, a driving trajectory for moving the vehicle from the current position of the vehicle to the target position. The controller is further arranged to provide, based on the driving trajectory, a driving instruction to a vehicle control unit controlling the movement of the vehicle and generate, based on the sensor input, a representation of the surrounding of the vehicle. The representation may comprise one or more images and/or point cloud maps of the surrounding of the vehicle.

The load handling system can also comprise an interface between the controller and one or more human-machine interface devices. The load handling system can thus be arranged, through the interface, to provide the representation of the surrounding of the vehicle to the one or more human-machine interface devices for visual illustration of the surrounding of the vehicle to an operator of the load handling system. The load handling system can also be arranged to collect user commands from the one or more human-machine interface devices to the controller. The user commands may belong to a set of commands available to the operator of the load handling system.

The controller is further arranged to operate in two separate operation states comprising a target selection operation state and a vehicle driving operation state. In the target selection operation state, the controller is arranged for identifying the target position in the representation of the surrounding of the vehicle as an initially-selected target position and verifying the target position as a verified target position by obtaining a verification for the initially-selected target position. In the vehicle driving operation state, the controller is arranged to cause the driving instruction, provided based on the verified target position, to be transmitted to the vehicle control unit. The controller is arranged to transition from the target selection operation state to the vehicle driving operation state based on the target position having been verified.

The solution allows effective separation of human control over the vehicle from machine control over the vehicle, while providing appropriate security measures through the verification. The target selection operation state allows both identification/selection and verification of the target for autonomous driving of the vehicle at the vehicle driving operation state.

In an embodiment, the set of commands available to the operator of the load handling system has a first subset of commands available to the operator of the load handling system when the controller operates in the target selection operation state and a second subset of commands available to the operator of the load handling system when the controller operates in the vehicle driving operation state. The first subset of commands and the second subset of commands are different allowing the different operation states to be tailored for differing degree of human-machine interaction, in particular with the vehicle driving operation state having an increased degree of autonomous control for the vehicle, e.g. autonomous driving of the vehicle. In the vehicle driving operation state, human control over the movement of the vehicle may be limited to a stop command, in which case controller may be arranged to exit from the vehicle driving operation state.

In an embodiment, the representation of the surrounding of the vehicle is provided to the one or more human-machine interface devices together with a representation of the driving trajectory for providing to the operator of the load handling system a graphical representation comprising an illustration of the driving trajectory within an illustration of the surrounding of the vehicle.

In an embodiment, the controller is arranged to transition from the target selection operation state to the vehicle driving operation state in response to the target position being verified.

In an embodiment, the controller is arranged to obtain the verification for the initially-selected target position by obtaining a verification of a driving trajectory for moving the vehicle from the current position of the vehicle to the initially-selected target position.

In an embodiment, the controller is further arranged to obtain the verification for the initially-selected target position as a verification of the graphical representation, which comprises the illustration of the driving trajectory to the initially-selected target position. This allows the operator to visually observe how the driving trajectory behaves in the surrounding of the vehicle and provide the verification accordingly.

In an embodiment, the verification for the initially-selected target position comprises at least one of the following: a command of the operator of the load handling system collected from the one or more human-machine interface devices via the interface to the controller, a command of the operator of the load handling system obtained from a verification device to the controller, and a response signal, such as an automated response signal, from the one or more human-machine interface devices verifying that the graphical representation has been provided for visual illustration to the operator of the load handling system.

In an embodiment, the controller is arranged, in the target selection operation state, to provide a zoomed-in view of the representation (or the illustration thereof) of the surrounding of the vehicle around the initially-selected target position for obtaining the verification for the initially-selected target position.

In an embodiment, the target position is a position for loading or unloading a load with the load handling equipment.

In an embodiment, the target position is defined relative to an identified load for loading or an identified position for a carried load for unloading the carried load.

In an embodiment, the controller is arranged, in the vehicle driving operation state, to repeatedly update the sensor input for providing updated sensor input and repeatedly update the driving instruction to the vehicle control unit based on the updated sensor input. This allows, on one hand, reduce the effect of drift on controlling the vehicle and, on the other hand, provide the driving instruction to the vehicle in portions of reduced size thereby simplifying the requirements for data control at the vehicle and for data transfer to the vehicle. In a further embodiment, the controller is arranged, in the vehicle driving operation state, to repeatedly update the driving trajectory based on the updated sensor input and the verified target position for providing updated driving trajectory. Then, the driving instruction can be repeatedly updated to the vehicle control unit based on the updated driving trajectory, and thereby on the updated sensor input.

According to a second aspect, a method may be provided for controlling a vehicle with load handling equipment. The method comprises receiving sensor input from a system of sensors at the vehicle for monitoring and mapping the surrounding of the vehicle. The system of sensors may comprise at least an image sensor unit and/or a distance mapping sensor unit. The method further comprises identifying a target position for the vehicle for load handling and determining, based on the sensor input and the target position, a driving trajectory for moving the vehicle from the current position of the vehicle to the target position. The method comprises providing, based on the driving trajectory, a driving instruction to a vehicle control unit controlling the movement of the vehicle and generating, based on the sensor input, a representation of the surrounding of the vehicle. The representation may comprise one or more images and/or point cloud maps of the surrounding of the vehicle.

The method may comprise causing the representation of the surrounding of the vehicle to be provided to one or more human-machine interface devices for visual illustration of the surrounding of the vehicle to an operator of the load handling system. The method may also comprise collecting user commands from the one or more human-machine interface devices. The user commands may belong to a set of commands available to the operator of the load handling system.

The method may comprise operation in two separate operation states comprising a target selection operation state and a vehicle driving operation state. The method comprises transitioning from the target selection operation state to the vehicle driving operation state based on the target position having been verified. The target position is identified, in the target selection operation state, in the representation of the surrounding of the vehicle as an initially-selected target position and verified as a verified target position by obtaining a verification for the initially-selected target position. The driving instruction, provided based on the verified target position, is caused to be transmitted to the vehicle control unit in the vehicle driving operation state.

According to a third aspect, a computer program product is disclosed. The computer program product comprises instructions which, when executed by a computer, cause the computer to carry out the aforementioned method.

It is to be understood that the aspects and embodiments described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding and constitute a part of this specification, illustrate examples and together with the description help to explain the principles of the disclosure. In the drawings:
**Fig. 1** schematically illustrates a system according to an example,
**Fig. 2** illustrates a method according to an example, and
**Fig. 3** illustrates a view for load handling according to an example.

Like references are used to designate equivalent or at least functionally equivalent parts in the accompanying drawings.

### DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

The presently disclosed solutions may be used for load handling. In particular, they may be utilized for any of user-assisted, teleoperated or autonomous load handling.

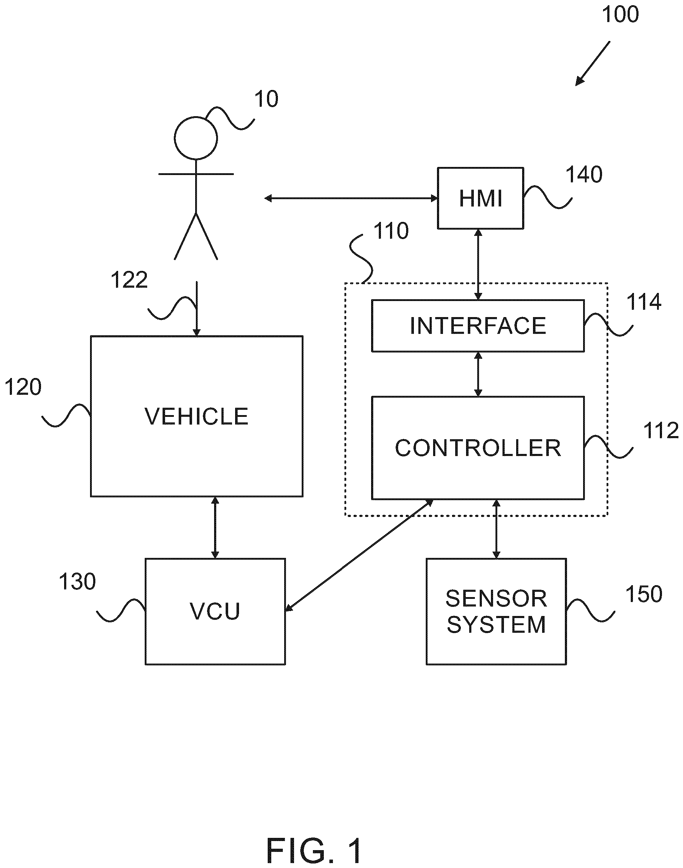

Fig. 1 illustrates a system 100, which comprises at least a load handling system (LHS) 110 for a vehicle 120 with load handling equipment (herein also "the LHS"). The system 100 may also comprise any or all of the additional components mentioned herein but they may also be provided separately.

The LHS 110 can be configured for controlling load handling for the vehicle 120. For this purpose, it may comprise a controller 112. In particular, the controller 112 may be configured for providing driving instructions for the vehicle for moving to a load and/or to a position for unloading a carried load. In addition, it may be configured for providing actuating instructions for the load handling equipment for moving the load. For any load handling vehicle such as the vehicle disclosed herein, a route to the load and/or to the position for unloading the carried load may be dependent on the process of loading/unloading and therefore also the driving instructions can become dependent on the process of loading/unloading, for example in terms of orientation and/or position of the vehicle for the loading/unloading. For load handling, the controller 112 may be configured to park the vehicle 120 beside a load and/or an unloading position so that the load may be loaded/unloaded with the load handling equipment. For example, in case of a loader crane the load may be lifted to or from the load bed of the vehicle and, in case of a hook lift the load may be pulled on to or pushed off the load bed of the vehicle with the hook-lift arm. The LHS may also be configured for causing stabilizer legs of the vehicle to be activated for the loading/unloading.

The vehicle 120 may be a freely moving vehicle, in which case it can face various navigational challenges from collision avoidance to target localization. It may be arranged for free movement in two-dimensions, e.g. on paved or unpaved ground. The vehicle may be a wheeled vehicle, which can provide freedom of movement over a working surface. The vehicle may be autonomous or semi-autonomous vehicle. For example, the vehicle may be arranged to move autonomously, while manual braking may still be facilitated to allow a user monitoring the operation of the vehicle to slow and/or stop the vehicle. The vehicle may be a by-wired vehicle. In particular, the vehicle may be a truck. The vehicle may be arranged for various applications such as transportation, waste handling or construction.

The vehicle may have a necessary safety compliance for autonomous or semi-autonomous load handling. In that case, an operator (onboard or offboard) may oversee the operation of the vehicle and the load handling equipment. The vehicle may be equipped with a safety-rated braking system (e.g. SAE L3, L4 or L5 autonomy) for the operator to use. Alternatively, the vehicle may be reliable but does not have the necessary safety compliance for autonomous load handling. In such a case, the vehicle may be configured for a supervisor to initiate the operation of the load handling equipment, allowing the supervisor to guide and monitor the load handling. The supervisor can then responsible for exception handling (e.g. SAE L2 - L3 autonomy) .

The vehicle 120 may be equipped with load handling equipment. The load handling equipment may be arranged as an integral part of the vehicle. The load handling equipment may be arranged to facilitate loading and/or unloading of the vehicle, i.e. loading and/or unloading the load, which in the case of unloading is the carried load. For this purpose, the load handling equipment may comprise one or more movable load handling actuators. The load handling equipment may comprise or consist of any of the following, for example: a hook lift, a skip loader, a crane, a roll off truck hoist, a tail lift and any other movable arm for the load handling. The crane may be a loader crane, a truck-loaded crane, a forestry crane, a recycling crane or any vehicle-mounted crane. In general, the load handling equipment may be a vehicle-mounted piece of equipment, such as a vehicle-mounted crane, in contrast to for example mobile cranes, which have their own chassis. The load handling equipment may be separable from the vehicle.

The load 320 may correspond to a cargo-carrying object. It may be a container, such as an ISO container, an intermodal container or a flatrack container. However, in general it may be any structured load such as a flatbed, a flatrack, a bin, a recycling container, a package of building material, a dumpster body or any other type of goods. The load may comprise a grappling interface for the working unit(s), such as a hook handle or bar, for loading and/or unloading the load to the vehicle.

The system 100 may comprise a vehicle control unit (VCU) 130, which may be provided as a part of the LHS 110, or the controller 112 thereof, or as a vehicle control system (VCS) that is separate from the LHS 110. For example, the VCU may be integrated to the vehicle 120. The VCU may be configured for directly controlling operations of the vehicle, whereas the controller 112 may be configured for higher-level planning for controlling the vehicle. The VCU 130 may be configured for providing actuator commands to the vehicle 120 and/or for receiving intrinsic measurement data from the vehicle 120. The VCU 130 may be configured to provide operational information such as intrinsic estimates or vehicle status to the controller 112 and/or for receiving control configurations such as driving trajectories from the controller 112. Vice versa, the controller 112 may be configured for receiving the operational information from the VCU 130 and/or providing the control configurations to the VCU 130.

The solutions disclosed herein may be provided as vehicle agnostic solutions, allowing the solutions to be utilized with no special requirements for the vehicle 120, for example in pre-existing vehicles as a retrofit. This can be achieved by the controller 112 being configured to interact with different types of VCUs 130.

The system 100 may also comprise one or more human-machine-interface (HMI) devices 140 (herein also "the HMI devices" for allowing an operator 10 of the vehicle 120, in particular the operator being a human operator, to interact with the LHS 110, or the controller 112 thereof. The operator of the LHS can thus be the operator of the vehicle. The HMI may comprise one or more user interfaces for allowing the operator to input information for the controller and/or receive information from the controller. The user interface may comprise a display, such as a touch screen, an augmented reality device, virtual reality googles or a regular display. The HMI devices may be arranged at the vehicle and/or separate from the vehicle, in the latter case allowing the operator to remotely control the vehicle with the HMI devices, such as with a remote control unit, e.g. for a loader crane. The HMI devices may comprise cloud-connection devices, for example, for communicating with the controller 112. The HMI devices may be arranged to provide a distributed user interface with some components integrated at the vehicle and others provided for remote control of the vehicle. The system 100 may also comprise an emergency brake 122 for stopping the vehicle 120 and this emergency brake may be arranged to bypass the LHS 110, thereby reducing delay for stopping the vehicle.

The system 100 may comprise a system of sensors 150 (herein also "the sensor system"), which may be arranged at the vehicle. The sensor system may be arranged for monitoring and mapping the surrounding of the vehicle 120. For this purpose, the sensor system may comprise at least an image sensor unit and/or a distance mapping sensor unit. The image sensor unit may comprise one or more cameras, which may be arranged for video imaging and/or color imaging, e.g. RGB cameras. The distance mapping sensor unit may comprise, for example, one or more optical sensors such as LIDARs and/or time-of-flight cameras. Any other distance mapping sensors such as ultrasonic sensors or radar-based sensors may also be used.

The system 100 may comprise an interface 114, which may be arranged as part of the LHS 110 but also separate from it. The interface is a communication interface between the controller 112 and the HMI devices 140 and it may comprise a wired interface, such as one or more data transmission cables, and/or a wireless interface, such as a radio frequency communication interface. Similar or corresponding interfaces may also be between other parts of the system 100, for example between the VCU 130 and the controller 112 and/or between the sensor system 150 and the controller. However, these need not be described here in detail.

The controller 112 may be a load handling controller, such as an autonomous load handling system (ALHS). The controller 112 may be a centralized controller or a distributed controller. It may comprise one or more control units, which may be positioned together or separate. The controller 112, fully or in part, may be arranged to be mounted to the vehicle 120 for operation. For example, it may be included as part of a working equipment assembly comprising the load handling equipment and arranged to be mounted to the vehicle for operation. Alternatively or additionally, the controller may be arranged to operate with remote connection to the vehicle 120, for example through the VCU 130. This allows remote control of the vehicle. The vehicle can also comprise a receiver and/or a transmitter-receiver for communicating with the controller. In general, the vehicle may comprise a receiver and/or a transmitter (both options including the possibility also for a transmitter-receiver) coupled to the controller for providing instructions to the controller and/or facilitating transmission of information, such as status information, from the controller.

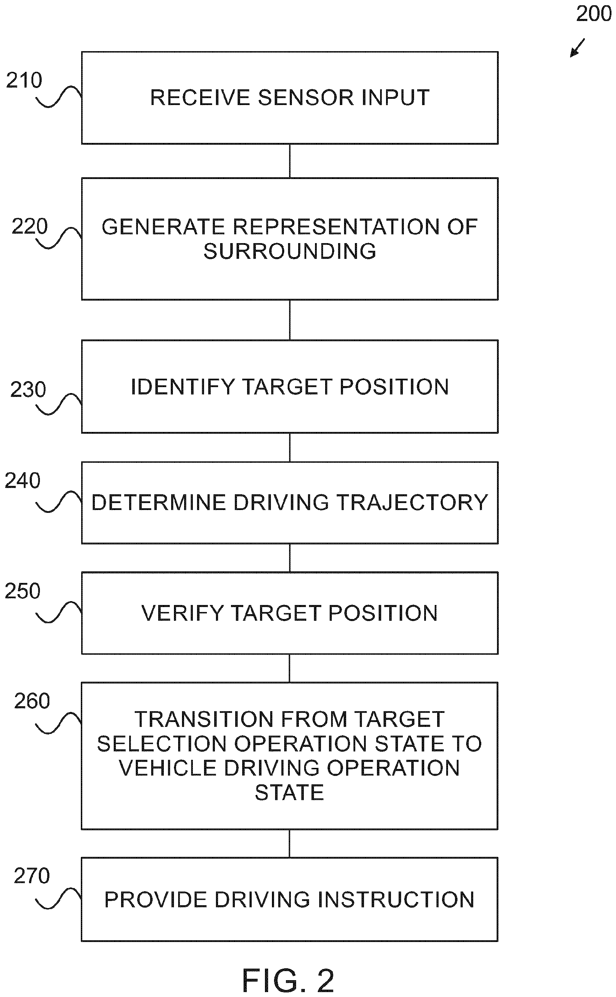

The controller 112 may comprise one or more processors (herein also "the processors") and one or more memories. The memories may comprise instructions which, when run by the processors cause any of the acts described herein for the controller and/or the LHS to be performed. In particular, these acts may comprise any or all of the acts described with reference to Fig. 2 and the controller may be arranged accordingly. Similarly, a computer program product may comprise any or all of the acts described herein, in particular with reference to Fig. 2.

Fig. 2 illustrates a method 200, which may be used for controlling the vehicle 120 with the load handling equipment as described herein. The method, or any of its parts in any combination, may be performed by the controller 112 and/or the LHS 110. The method 200 comprises several parts which may be performed independently from each other. The parts may be performed in the indicated order or in any other applicable order including concurrently.

The method 200 comprises receiving 210 sensor input from the system of sensors 150 at the vehicle 120 for monitoring and mapping the surrounding of the vehicle. The sensor input may be received repeatedly in time for continuously monitoring the surrounding of the vehicle. Through the sensor input, in particular from the distance mapping sensor input, point clouds may be provided, as raw data point clouds and/or as conditioned point clouds. The point clouds may be provided in accordance with any of the methods available to a person skilled in the art and they are to be contrasted with images, which are composed in markedly distinct manner, e.g. from pixels. Images can also be provided through the sensor input, in particular from the image sensor unit. The point clouds may be produced by one or more scanners, in contrast to images which may be produced with cameras. The sensor input from the image sensor unit may be convertable to a quantized indication, such as a pixelized view, of the surrounding of the vehicle. The system of sensors and/or the controller may be configured for providing machine-readable data matrices for automated identification of a target such as the load and/or human-readable images for interacting with an on-board/offboard human operator.

The sensor input is used for generating 220 a representation of the surrounding of the vehicle. The representation may be generated solely based on the sensor input or based on the sensor input and additional data such as additional data of the surrounding, which additional data may be obtained earlier by the LHS 110 and/or from one or more external sources. The representation may be repeatedly updated, in particular for continuous monitoring of the surrounding. This can be done in particular when the vehicle is moving but also when it is stationary as the surrounding may change. The representation can be a three-dimensional representation of the surrounding. It may comprise one or more images, such as color images, and/or point cloud maps of the surrounding of the vehicle. The representation may be provided dynamically so that it can be changed when the vehicle moves and/or the surrounding of the vehicle changes. The representation may also be provided with multiple views such as a camera view and a point cloud view and the operator may be provided a choice for switching between the multiple views. Alternatively or additionally, two views may be provided simultaneously, for example so that one view such as the point cloud view may be embedded into another view such as the camera view.

The representation may be generated by the controller 112 itself based on the sensor input. It may also be generated based on the sensor input and a pre-generated map received by the controller. The controller 112 may be arranged to store the representation into the one or more memories. The controller 112 may be arranged to activate a pre-generated representation when the vehicle arrives (e.g. re-arrives) at the surrounding described by the pre-generated representation.

The representation describes the surrounding of the vehicle 120. The surrounding may comprise one or more landmarks, such as obstacles 310. These may include other vehicles, buildings, containers etc. The surrounding may also comprise the load. The representation may be a two- or three-dimensional map. It may have a coordinate system, which may be fixed. This allows providing a frame of reference, which may be stationary. The controller 112 may be arranged to facilitate a graphical illustration of the representation, for example through the interface 114, and the HMI devices 140 in particular.

The method 200 may comprise causing the representation of the surrounding of the vehicle 120 to be provided to the HMI devices 140 for visual illustration of the surrounding of the vehicle to the operator 10 of the LHS 110. This representation may be provided through the interface 114, in particular by the controller 112 causing the representation to be transmitted via the interface 114 to the HMI devices 140. The representation may be illustrated to the operator through the display, such as the touch screen, the augmented reality device, the virtual reality googles or the regular display. Similarly, user commands are collected from the HMI devices 140 and this can also be done through the interface 114, in particular so that the controller 112 collects the user commands via the interface 114 from the HMI devices 140. This may involve collecting at least some of the user commands through the touch screen and/or through one or more physical actuators such as a button, a keyboard or a joystick. The user commands may be collected through the same device of the HMI devices, such as the touch screen, used to illustrate the representation to the operator but also through a different device.

The method 200 comprises identifying 230 a target position for the vehicle 120 for load handling. The target position can be a position for loading and/or unloading a load with the load handling equipment. It can be identified manually, e.g. by the operator 10, and/or automatically, e.g. by the controller 112. The target position can be identified by the user commands but also by automatized pattern recognition, for example. One or more initial targets 330 may also be identified automatically for the operator 10 to select. For example, the target position may be identified from a front face of the load 320, such as a container. The operator may also be provided with an opportunity to change a default selection for the target position and/or add the target position, even when it is not provided as an pre-existing alternative. The target position can be identified from the representation, as indicated above, or from the illustration thereof. The target position may be defined relative to an identified load for loading or an identified position for a carried load for unloading the carried load, e.g. as the position of the vehicle for the loading/unloading.

The method 200 comprises determining 240 a driving trajectory for moving the vehicle 120 from the current position of the vehicle to the target position. The driving trajectory may be determined all the way to the target position. The driving trajectory may be determined in a space of spatial coordinates, such as x-y or x-y-z coordinates, in which case the space may comprise or consist of a two-dimensional coordinate space or a three-dimensional coordinate space. Alternatively or additionally, it may be determined in some other space for moving the vehicle such as an actuator space, i.e. a space of control commands for actuators for moving the vehicle. In this case, the dimensionality of the space may correspond to the number of the degrees of freedom for the actuators. The driving trajectory may be expressed in vector or matrix form. The driving trajectory is determined based, at least, on the sensor input and the target position. For example, the driving trajectory may be determined based on the representation, which is generated based on the sensor input. The driving trajectory may be determined as the shortest trajectory from the current position of the vehicle to the target position with optional conditions. The optional conditions may comprise a requirement for the pose of the vehicle and/or the load handling equipment at the target position. The optional conditions may also comprise a requirement to evade an obstacle 310, such as an object or a person, identified in the sensor input.

The vehicle may be a car-like vehicle with steering, such as a truck with a hooklift, which has non-holonomic dynamics. For such dynamics, the vehicle cannot be commanded to create a lateral motion without steering and having velocity in the longitudinal direction. Therefore, the driving trajectory may typically be determined so that it starts from the vehicle and ends at the target position with a curve that allows the vehicle to smoothly perform the loading/unloading, e.g. by latching the load handling equipment, such as the hook lift, onto the load.

The representation of the surrounding of the vehicle 120 may be provided to the HMI devices 140 together with a representation of the driving trajectory. The representation of the driving trajectory may be illustrated with a line or a set of symbols defining a line. This allows providing to the operator 10 of the LHS 110 a graphical representation, which may comprise an illustration of the driving trajectory within an illustration of the surrounding of the vehicle. The representation of the driving trajectory may extend along the whole length or a partial length of the driving trajectory.

In the present solutions, operations can be performed in two separate operation states comprising a target selection operation state and a vehicle driving operation state. In the target selection operation state, the target position is identified and verified, whereas in the vehicle driving operation state the vehicle is moved towards the target position. Accordingly, the vehicle driving operation state may correspond to an autonomous operation state for the vehicle. The vehicle may be stationary when the target selection operation state is operational.

In the target selection operation state, the target position is identified in the representation of the surrounding of the vehicle as an initially-selected target position, for example by any means detailed above for identifying 230 the target position. Then, the method 200 comprises verifying 250 the target position as a verified target position by obtaining a verification for the initially-selected target position. The verification may be provided by the operator 10 and/or by a supervisory system, i.e. as an automated verification, for example based on autonomous pattern recognition. For obtaining the verification for the initially-selected target position, a zoomed-in view of the representation of the surrounding of the vehicle around the initially-selected target position may be provided. This may be provided in response to the initially-selected target position being selected, by the operator or by automatic selection.

The verification for the initially-selected target position may be obtained by obtaining a verification of a driving trajectory for moving the vehicle from the current position of the vehicle to the initially-selected target position. Thus, the target position is initially selected but only when it has been verified that the resulting driving trajectory to that target position is acceptable, is the target position verified as the verified target position. The verification of the driving trajectory can be obtained by any means disclosed herein for obtaining the verification for the target position / verifying the target position, e.g. by the operator and/or by the supervisory system. In particular, the verification for the initially-selected target position may be obtained as a verification of the graphical representation, which may comprise the illustration of the driving trajectory to the initially-selected target position, as mentioned above. For obtaining the verification, the graphical representation may be provided to the operator and the verification may be obtained from the operator, for example by collecting a user command for verification.

In general, the verification may be obtained based on a display of a graphical representation comprising, at least, an indication of the initially-selected target position. The graphical representation may also comprise image data from the image sensor unit, received through the sensor input, allowing clear visualization of the surrounding of the vehicle. It may naturally also comprise data from the distance mapping sensor unit, such as point cloud data, also received through the sensor input. Importantly, the graphical representation may comprise a representation of the driving trajectory. The present solutions thus allow the driving trajectory to be verified before dispatching the vehicle. Moreover, the driving trajectory can be verified visually and/or with respect to the surrounding of the vehicle. The vehicle may be thus dispatched in response to the target position, and the driving trajectory in particular, being verified. When the vehicle is dispatched, the vehicle may be transferred to autonomous operation.

In general, the verification for the initially-selected target position may comprise a command of the operator 10 of the LHS 110 collected from the HMI devices 140 via the interface 114 to the controller 112 and/or a command of the operator 10 of the LHS 110 obtained from a verification device to the controller 112. Alternatively or additionally, the verification may comprise a response signal, which may be an automated response signal, from the HMI devices 140 verifying that the graphical representation has been provided for visual illustration to the operator 10 of the LHS. Thus, the operator may have been provided an opportunity to withdraw the verification. In all cases, the verification may additionally comprise a separate sub-verification by the supervisory system.

Based on the target position having been verified, the method 200 comprises transitioning 260, indirectly or directly, from the target selection operation state to the vehicle driving operation state. The transition may be performed in response to the target position being verified, in particular in response to the verified target position being obtained. Thus, the target selection operation state may be directly closed when target is verified. Accordingly, the vehicle driving operation state may be directly entered when the target is verified.

The method 200 comprises providing 270 one or more driving instructions (herein also "the driving instructions") to the vehicle control unit (VCU) controlling the movement of the vehicle. The driving instructions can be provided based on the driving trajectory but they do not necessarily need to correspond to the full length of the driving trajectory. While a single set of driving instructions may extend to the target position at the end of the driving trajectory, providing the driving instructions in shorter increments allows conserving both computational and data transmission resources. The driving instructions may may be provided to extend beyond a threshold length which allows the vehicle to be slowed down to a halt within the projected trajectory in response to a sudden stop command, the projected trajectory here indicating the spatial trajectory corresponding to said driving instructions. The threshold length may correspond to a spatial length and/or temporal length for vehicle movement with said driving instructions. For example, if the vehicle is instructed to drive with a speed from which it takes 4 seconds to stop to a halt, the threshold length corresponds to driving instructions for the next 4 seconds of operation so that if there are only 4 seconds of driving instructions left and now further driving instructions have been received, the vehicle is directed to stop rather than continue with until the end of said driving instructions. This adds to the safety and comfort of the operator, as the upcoming maneuvers are intuitive and predictable seconds upfront from the screen.

The driving instructions may be configured for having the vehicle follow the driving trajectory in which the target position has been verified. As such the driving instructions correspond to the driving trajectory to the verified target position. The driving instructions may be transmitted to the vehicle control unit in the vehicle driving operation state, in particular so that the controller 112 causes the driving instructions to be transmitted to the VCU 130. The LHS 110 may be configured to prevent the driving instructions from being provided to the VCU 130 and/or transmitted unless the target position is verified, e.g. by preventing transmission of the driving instructions unless the target position is verified and/or by only generating the driving instructions for the verified target position.

It is enough to verify the target position once, after which the vehicle operation driving operation state may be entered and the vehicle may be autonomously moved to the target position. While in the vehicle driving operation state, the representation may still be repeatedly updated allowing the LHS 110 to react to in any drift in the movement of the vehicle and/or changes in the surrounding of the vehicle, e.g. by stopping the vehicle. The LHS may be configured for recognizing an exception and stopping the vehicle in response to the (recognized) exception. It may also be configured to transition back to the target selection operation state for reverification of the target position. In the vehicle driving operation state, the sensor input may be repeatedly updated for providing updated sensor input. Similarly, the driving instruction may be repeatedly updated based on the updated sensor input, even when the verified target position stays constant. There is thus no need to request any instructions from the user. The driving instruction may be updated multiple times per second, for example 5-10 times per second or more often. While the driving instruction can be updated to account for drift following the driving trajectory and/or changes in the surrounding, the driving trajectory may primarily be updated to direct the vehicle towards and along the (original) driving trajectory for directing the vehicle to the verified target position. However, the driving trajectory may also be repeatedly updated based on the updated sensor input and the verified target position for providing updated driving trajectory. Then, the driving instruction can be repeatedly updated to the vehicle control unit based on the updated driving trajectory, which allows the driving trajectory itself to be changed. This allows larger changes for the path of the vehicle, even when the verified target position is unchanged. While this may be used for obstacle avoidance, the vehicle may also be stopped in case of an obstacle 310. Importantly, all the aforementioned actions can be made autonomously in the vehicle driving operation state.

Entering (i.e. transitioning into) the vehicle driving operation state may involve dispatching the vehicle. This may involve setting the vehicle in motion towards the target position after, optionally, disengaging the parking brake of the vehicle. The controller may be configured to send one or more commands for dispatching the vehicle to the VCU in response to the target position being verified and/or transitioning into the vehicle driving operation state. In the vehicle driving operation state, the vehicle may move to the target position and, optionally, perform the loading and/or the unloading. The controller may be configured for providing instructions for causing this to happen automatically, based on the verified target position. No user input is necessarily required in the vehicle driving operation state.

The user commands mentioned above may belong to a set of commands available to the operator 10 of the LHS 110. The set of commands may comprise a command for selecting the target position and/or verifying the target position, for example by verifying the driving trajectory to the target position. The set of commands may also comprise a command for stopping the vehicle 120 and/or a command for changing control mode of the vehicle from autonomous operation to human operation. The set of commands available to the operator of the LHS may have a first subset of commands available to the operator of the LHS when the controller operates in the target selection operation state and a second subset of commands available to the operator of the LHS when the controller operates in the vehicle driving operation state. The first subset of commands and the second subset of commands may be different, fully or partially. The set of commands available to the operator in the target selection operation state may comprise any of the following: a command for selecting the target position, a command for having the target position being automatically identified and a command for verifying the target position. All the commands may be separate. Any or all of the commands may be requested as a response to a prompt from the controller. The target selection operation state may also have one or more user interface commands such as a command for zooming a view for the representation and/or switching between different views for the representation. The set of commands available to the operator in the vehicle driving operation state may comprise or consist of a stop command for stopping the vehicle and/or a command for changing control mode of the vehicle from autonomous operation to human operation and, optionally, one or more user interface commands, which do not affect the movement of the vehicle, e.g. changing the view of the surrounding of the vehicle displayed to the operator 10.

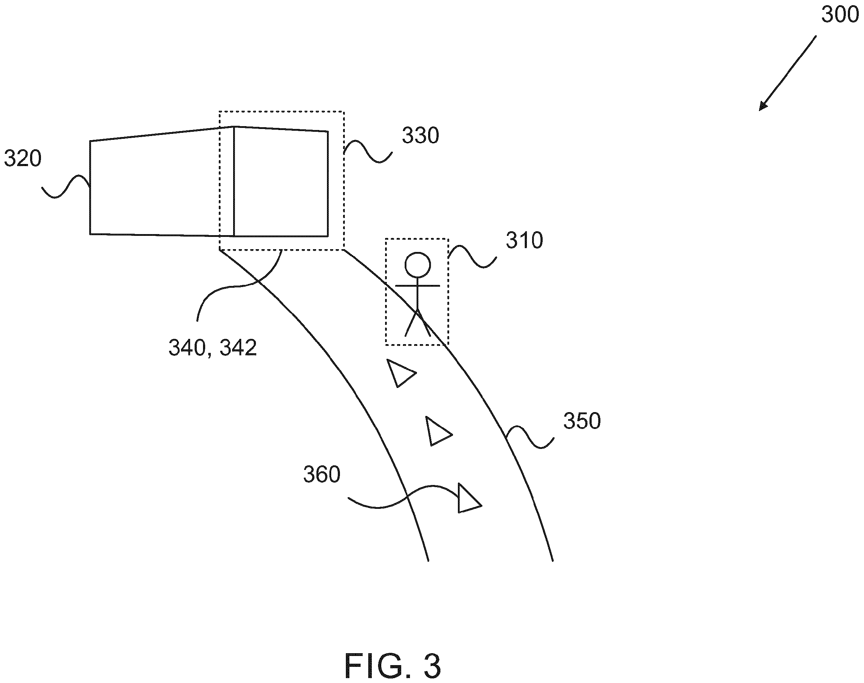

Fig. 3 shows an example of a view 300 for the load handling as described herein. The view can be provided as the graphical representation as described above. It can be displayed in the target selection operation state and/or in the vehicle driving operation state.

The view illustrates how the obstacles 310 and the load 320 can be visualized based on the representation. The view also illustrates how an initial target 330 may be emphasized for selection for the user for providing an initially-selected target position 340. In the illustrated example, the initial target has already been selected for obtaining the initially-selected target position 340 since the driving trajectory has already been determined and a representation 350 of the driving trajectory illustrated.

The example further illustrates how the driving instruction 360 may be illustrated based on the representation. Accordingly, the initially-selected target position 340 may already be verified as the verified target position 342 so that the driving instruction 360 can be provided.

The controller as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art(s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, when falling within the purview of the claims. Although various examples have been described above with a certain degree of particularity, or with reference to one or more individual embodiments, those skilled in the art could make numerous alterations to the disclosed examples without departing from the scope of this specification.

## Claims

1. A load handling system for a vehicle with load handling equipment, the load handling system comprising:
- a controller arranged to:
∘ receive sensor input from a system of sensors at the vehicle, comprising at least an image sensor unit and a distance mapping sensor unit, for monitoring and mapping the surrounding of the vehicle;
∘ identify a target position for the vehicle for load handling;
∘ determine, based on the sensor input and the target position, a driving trajectory for moving the vehicle from the current position of the vehicle to the target position;
∘ provide, based on the driving trajectory, a driving instruction to a vehicle control unit controlling the movement of the vehicle; and
∘ generate, based on the sensor input, a representation of the surrounding of the vehicle, the representation comprising one or more images and/or point cloud maps of the surrounding of the vehicle;
and
- an interface between the controller and one or more human-machine interface devices, the load handling system being arranged, through the interface, to:
∘ provide the representation of the surrounding of the vehicle to the one or more human-machine interface devices for visual illustration of the surrounding of the vehicle to an operator of the load handling system; and
∘ collect user commands from the one or more human-machine interface devices to the controller, wherein the user commands belong to a set of commands available to the operator of the load handling system;
wherein the controller is further arranged to operate in two separate operation states comprising:
∘ a target selection operation state, wherein the controller is arranged for identifying the target position in the representation of the surrounding of the vehicle as an initially-selected target position and verifying the target position as a verified target position by obtaining a verification for the initially-selected target position; and
∘ a vehicle driving operation state, wherein the controller is arranged to cause the driving instruction, provided based on the verified target position, to be transmitted to the vehicle control unit;
and wherein the controller is further arranged to transition from the target selection operation state to the vehicle driving operation state based on the target position having been verified.

2. The load handling system according to claim 1, wherein the set of commands available to the operator of the load handling system has a first subset of commands available to the operator of the load handling system when the controller operates in the target selection operation state and a second subset of commands available to the operator of the load handling system when the controller operates in the vehicle driving operation state, the first subset of commands and the second subset of commands being different.

3. The load handling system according to any preceding claim, wherein the representation of the surrounding of the vehicle is provided to the one or more human-machine interface devices together with a representation of the driving trajectory for providing to the operator of the load handling system a graphical representation comprising an illustration of the driving trajectory within an illustration of the surrounding of the vehicle.

4. The load handling system according to any preceding claim, wherein the controller is arranged to transition from the target selection operation state to the vehicle driving operation state in response to the target position being verified.

5. The load handling system according to any preceding claim, wherein the controller is arranged to obtain the verification for the initially-selected target position by obtaining a verification of a driving trajectory for moving the vehicle from the current position of the vehicle to the initially-selected target position.

6. The load handling system according to claim 5, when dependent on claim 3, wherein the controller is further arranged to obtain the verification for the initially-selected target position as a verification of the graphical representation, which comprises the illustration of the driving trajectory to the initially-selected target position.

7. The load handling system according to any preceding claim, wherein the verification for the initially-selected target position comprises at least one of the following:
- a command of the operator of the load handling system collected from the one or more human-machine interface devices via the interface to the controller,
- a command of the operator of the load handling system obtained from a verification device to the controller, and
- a response signal from the one or more human-machine interface devices verifying that the graphical representation has been provided for visual illustration to the operator of the load handling system.

8. The load handling system according to any preceding claim, wherein the controller is arranged, in the target selection operation state, to provide a zoomed-in view of the representation of the surrounding of the vehicle around the initially-selected target position for obtaining the verification for the initially-selected target position.

9. The load handling system according to any preceding claim, wherein the target position is a position for loading or unloading a load with the load handling equipment.

10. The load handling system according to claim 9, wherein the target position is defined relative to an identified load for loading or an identified position for a carried load for unloading the carried load.

11. The load handling system according to any preceding claim, wherein the controller is arranged, in the vehicle driving operation state, to repeatedly update the sensor input for providing updated sensor input and repeatedly update the driving instruction to the vehicle control unit based on the updated sensor input.

12. A method for controlling a vehicle with load handling equipment, the method comprising:
- receiving sensor input from a system of sensors at the vehicle, comprising at least an image sensor unit and a distance mapping sensor unit, for monitoring and mapping the surrounding of the vehicle;
- identifying a target position for the vehicle for load handling;
- determining, based on the sensor input and the target position, a driving trajectory for moving the vehicle from the current position of the vehicle to the target position;
- providing, based on the driving trajectory, a driving instruction to a vehicle control unit controlling the movement of the vehicle;
- generating, based on the sensor input, a representation of the surrounding of the vehicle, the representation comprising one or more images and/or point cloud maps of the surrounding of the vehicle;
- causing the representation of the surrounding of the vehicle to be provided to one or more human-machine interface devices for visual illustration of the surrounding of the vehicle to an operator of the load handling system;
- collecting user commands from the one or more human-machine interface devices, wherein the user commands belong to a set of commands available to the operator of the load handling system; and
- transition from a target selection operation state to a vehicle driving operation state based on the target position having been verified;
wherein the target position is identified, in the target selection operation state, in the representation of the surrounding of the vehicle as an initially-selected target position and verified as a verified target position by obtaining a verification for the initially-selected target position; and
wherein the driving instruction, provided based on the verified target position, is caused to be transmitted to the vehicle control unit in the vehicle driving operation state.

13. A computer program product comprising instructions which, when executed by a computer, cause the computer to carry out the method of claim 12.
